# EUROPEAN PATENT SPECIFICATION

(11) **EP 3 589 393 B1**
(45) Date of publication and mention of the grant of the patent: **12.06.2024**
(21) Application number: 18808135.0
(22) Date of filing: 17.01.2018
(51) Int. Cl.: B01F 27/25, B01F 35/00, B01F 35/10, B01F 35/30, F16H 57/033

(54) **A MODULAR SUBMERSIBLE AGITATOR FOR MIXING FLUID MATERIALS**
MODULARER TAUCHFÄHIGER RÜHRER ZUM MISCHEN VON FLÜSSIGEN MATERIALIEN
AGITATEUR SUBMERSIBLE MODULAIRE POUR LE MÉLANGE DE MATIÈRES FLUIDES

(30) Priority: 28.02.2017 TR 201703115
(43) Date of publication of application: 08.01.2020
(73) Proprietor: Eys Metal Sanayi Ve Ticaret Limited Sirketi, Efeler/Aydin (TR)
(72) Inventor: KÖSE, Utku, Efeler/Aydin (TR)
(74) Representative: Kaya, Erdem
(86) International application number: PCT/TR2018/050015
(87) International publication number: WO 2018/236315

(56) References cited:
- DE-A1- 10 251 499
- DE-A1- 19 738 429
- DE-A1-102014 220 281
- DE-U1- 9 210 606
- US-A- 5 470 199

## Description

### Technical Field

The invention relates to a liquid leak tight submersible agitator for mixing all types of suspensions homogenously.

The invention in particular relates to modularity feature which allows easy assemblingdisassembling of the actuator, gearbox which is used when low rotation rates are desired, and liquid accelerator parts of the submersible agitator.

### Background Art

At the present time, submersible agitators are composed of an electrical part (junction box) where electrical connections are located, a motor part where an actuator with a rotor and a stator is provided in order to convert the electrical energy into kinetic energy, a middle bearing part which is bearing the rotor shaft, a gearbox part which transmits the motion from the motor part to the propeller part at the desired speed via a gear group, and a fluid accelerator part which ensures the liquid to be homogenously mixed.

In the prior art, in case of a malfunction, the submersible agitator has to be brought back to a repair shop, disassembled completely, repaired, assembled back and sent back to the installation site. This causes a lot of downtime and high maintenance costs.

In the prior art, bearing points supporting the propeller shaft at the propeller part, and the reduction group located at the gearbox part are lubricated by the same lubricant contained at a single volume. Lubricant properties suitable for use with these parts differ from each other and using same type of lubricant has a detrimental effect on machine efficiency and lifetime of the parts.

In the prior art, in case of a liquid leakage at the propeller part, this liquid rapidly progresses from the propeller part to the transmission elements at the gearbox part and subsequently to the rotor and the stator located at the motor part, since these parts are not independent. This shortens the machine lifetime and leads to undesired conditions.

The submersible agitator is sometimes required to operate at different speeds depending on the properties of the medium of operation. For example, smaller propeller diameters and higher speeds can be used at media with lower density, while larger propeller diameters and lower speeds may be preferred at higher density media. In the prior art, this calls for a different product for each different media, which means having to carry many different fully assembled products in stock.

Various embodiments related to the said submersible agitators are encountered during a literature survey.

US patent no. US8277115 discloses a guiding device for submersible agitators. This guiding device comprises a structure which fixes the submersible agitator along the vertical axis and pivot about its own axis.

Another patent application no. US4687175 discloses a structure composed of a main column onto which the submersible agitator is fixed, fastening lugs for fixing this column onto the base, and intermediate parts introduced between this fastening lug part and the column which allow pivoting.

Aforementioned applications disclose improvements regarding the submersible agitator parts, however, they do not provide an innovation related to modularity feature.

DE 10 2014 220 281 A1 discloses a submersible agitator comprising an actuator module, a fluid accelerator module, a transmission module and a gearbox module with respective connection surfaces.

Therefore, improvements based on the technological developments about submersible agitators are required and it becomes necessary to develop new embodiments which overcome the aforementioned disadvantages and provide a solution for the prior art.

### Object of the Invention

The present invention is defined by the method of operating a submersible agitator according to claim 1. It relates to a submersible agitator which meets the aforementioned requirements, overcomes all disadvantages and provides further advantages.

The object of the invention is to provide the present submersible agitators with a modularity feature, in which the actuator, gearbox and the fluid accelerator parts are grouped as independent modules.

Another object of the invention is to allow for only replacing a faulty module of the submersible agitator in case of a malfunction, without having to ship the product to a repair shop and disassemble the whole product, thereby achieving savings related to repair costs, labor and downtime.

Another object of the invention is to allow gradual adjustment of the gear ratio based on the area of use by means of additional gearbox modules used in the invention. These gearbox modules connected in series allow establishing different propeller rotation rates depending on the number of gearboxes. Thereby, functions of more than one product will be provided by a single model and product variation will be achieved. Speed will be adjusted without attaching a gearbox or attaching multiple gearboxes based on the requirements in order to meet the user requirements for different media. For example, different products can be established based on different combinations of the standard modules and even a pump can be achieved by replacing the fluid accelerator module with a new module containing a pump impeller. This enhances the machine efficiency and provides ease of manufacturing, lower the stock costs and allow the machine to be used inside media with different densities.

Another object of the invention is to prevent the liquid to leak into the fluid accelerator module and reach other modules by providing a fluid accelerator cone design.

Another object of the invention is to prevent the liquid to leak into the fluid accelerator module and to reach the actuator module, by providing four chambers at the developed transmission module and gearbox module.

Another object of the invention is to provide independent modules in order to allow separate and differentiated lubrication suitable for the properties of the parts composing the fluid accelerator and gearbox modules. Thereby, a positive impact on the machine efficiency and part lifetime will be achieved.

Structural and characteristic features and all of the advantages of the invention shall become apparent with the appended drawings and the detailed description in reference to these drawings. Therefore, assessment should be taken into account according to the drawings and the detailed description.

### Brief Description of Drawings

Figure - 1; Shows a disassembled perspective view of the submersible agitator used in the method of the invention.
Figure - 2; Shows a two dimensional cross-section view of the submersible agitator used in the method of the invention.
Figure - 3; Shows a general mounted perspective view of the submersible agitator used in the method of the invention.
Figure - 4; Shows a two dimensional cross-section view of the fluid accelerator taper of the submersible agitator used in the method of the invention.

### Reference Numbers

- **1.**: Submersible Agitator
- **10.**: Actuator Module
- **11.**: Rotor
- **12.**: Stator
- **13.**: Rotor Shaft
- **14.**: Housing Rear Cover
- **15.**: Actuator Module Connection Surface
- **20.**: Gearbox Module
- **21.**: Reduction Group
- **22.**: Gearbox Module Connection Surface
- **30.**: Transmission Module
- **31.**: Fluid Accelerator Shaft
- **32.**: Transmission Module Connection Surface
- **40.**: Fluid Accelerator Module
- **41.**: Fluid Accelerator
- **42.**: Fluid Accelerator Taper
- **43.**: Fluid Accelerator Hub
- **44.**: Fluid Accelerator Cover
- **45.**: Fluid Accelerator Connection Surface
- **50.**: Electric Junction Module
- **51.**: Junction Cover
- **60.**: Fixing Screws
- **a, b, c, d.**: Chambers

### Detailed Description of One Example of the Invention

Figure - 1 shows disassembled views of the submersible agitator (1) used in the method of the invention in two different angles. On the leftmost of the side of the upper figure, the actuator module (10) can be seen. The actuator module (10) generates the rotational motion required by the moving parts using the rotor (11) and the stator (12) it contains. Using the electrical energy provided by the electric junction module (50), the stator (12) creates a magnetic field in order to provide the rotational motion of the rotor (11) it contains. A rotor shaft (13) which moves along the same axis with the rotor (11) and which is fixed to the rotor transmits the generated rotational motion to the gearbox module (20). The actuator module (10) is positioned on the gearbox module (20) by connecting the actuator module connection surface (15) and the gearbox module connection surface (22).

The mentioned gearbox module (20) transmits the rotational motion, by means of a reduction group (21) contained therein, from the actuator module (10), to the transmission module (30), at desired gear ratio and torque value. In the present system, a planet gear group is used as the said reduction group, however, it comprises all motion elements such as cone gear. The motion derived from the actuator module (10) is first delivered to the gearbox module (20) and later to the transmission module (30). The gearbox module connection surface (22) comprised by the gearbox module (20) and the transmission module connection surface (32) comprised by the transmission module (30) are connected.

The transmission module (30) comprises a fluid accelerator shaft (31). The fluid accelerator shaft (31) transmits the motion to the fluid accelerator module (40). Design of the fluid accelerator taper (42) developed inside the fluid accelerator module (40) prevents a possible liquid leakage when the agitator is running. The transmission module (30) and the gearbox module (20) will use the chambers (a, b, c, d) located therein in order to hold the liquid received from the fluid accelerator module (40) while at the same time, preventing the liquid passage to the actuator module (10). At the farthest end of the transmission module (30), the fluid accelerator hub (43) introduced at the fluid accelerator module (40) is connected to the said transmission module (30). The fluid accelerator shaft (31) is connected to the fluid accelerator (41) via the fluid accelerator cover (44). The fluid accelerator (41) performs mixing operation in order to achieve a homogenously mixed material. The fluid accelerator taper (42) located at the fluid accelerator module (40) is the most important element for preventing the liquid leakage into the submersible agitator (1). The fluid accelerator module (40) is positioned at the transmission module (30) by connecting the fluid accelerator connection surface (45) and the transmission module connection surface (32).

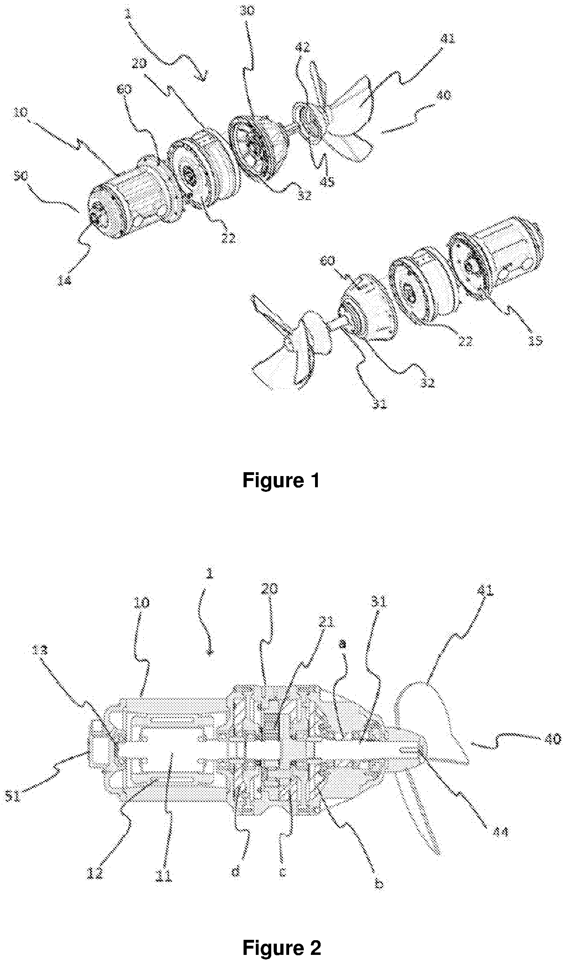

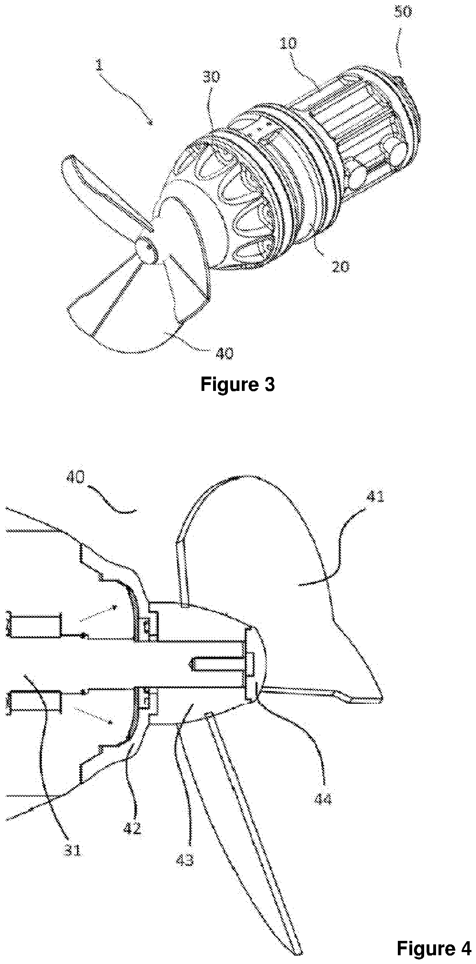

The said electric junction module (50) can also be seen in the figure. The said electric junction module (50) design is resilient against stress, strain and breaking, and has a structure which provides water resistance and protection for the motor against moist and liquid leakage by means of its insulated cable inlet. It is also the module which generates the electrical energy required by the actuator module (10). The junction cover (51) of the electric junction module (50) is mounted to the housing rear cover (14) located at the actuator module (10).

All elements shown in disassembled state in Figure - 1 are assembled together using the fixing screws (60).

Figure - 2 shows a two dimensional cross-section view of the submersible agitator (1) in mounted state. The rotor (11) and the stator (12) introduced at the actuator module (10) can be seen clearly in the figure. Furthermore, the reduction group (21) introduced at the gearbox module (20), which are not shown in Figure - 1, can also be seen here clearly.

Figure - 3, shows a perspective view of the submersible agitator (1) used in the method of the invention in mounted state.

Figure - 4 shows the design of the fluid accelerator taper (42) located at the fluid accelerator module (40) of the submersible agitator (1) used in the method of the invention.

The operating principle of the submersible agitator (1) used in the method of the invention, comprising elements whose structures and relative positions are described above, is described below.

In the developed submersible agitator (1), the rotor (11) and the stator (12) introduced at the actuator module (10) generate the kinetic energy in order to allow the fluid accelerator module (40) to perform rotational motion. This energy is transmitted via the rotor shaft (13) introduced at the actuator module (10) to the gearbox module (20), which in turn transmits the rotational energy delivered by the rotor shaft (13) to the transmission module (30) at desired torque and gear ratio using the reduction group (21). Later on, the transmission module (30) receives the motion at the desired torque level and transmits it to the fluid accelerator module (40) via the fluid accelerator shaft (31). A fluid accelerator taper (42) is designed in order to prevent liquid leak inside during the operation of the said submersible agitator (1). At the same time, chambers (a, b, c, d) are introduced at the transmission module (30) between the fluid accelerator module (40) and the gearbox module (20) in order to prevent the risk of foreign object passage into the actuator module (10).

## Claims

1. Method of operating a submersible agitator, comprising the following steps;
1) providing a submersible agitator (1) for accelerating a suspension, comprising at least one actuator module (10), at least one fluid accelerator module (40), a transmission module (30) which transmits the generated kinetic energy to the fluid accelerator module (40) along the same or different axes and gearbox modules (20) which allow adjusting the rotation speed gradually, wherein
- at least one of the actuator module (10), the transmission module (30) and the fluid accelerator module (40) is independent from the others,
- the actuator module (10), the gearbox modules (20), the transmission module (30) and the fluid accelerator module (40) comprise an actuator module connection surface (15), gearbox module connection surfaces (22), a transmission module connection surface (32) and a fluid accelerator connection surface (45) respectively, which match at least one of the respective connection surfaces, in order to allow connection between at least any two of the actuator module (10), the gearbox modules (20), the transmission module (30) and the fluid accelerator module (40);
2) selecting an operation without the gearbox module (20), with one gearbox module (20) or gearbox modules (20) connected in series, depending on the requirements in order to meet the user requirements for different media;
3) operating the submersible agitator (1) according to the selection without the gearbox module (20), with one gearbox module (20) or gearbox modules (20) connected in series, allowing establishing different propeller rotation rates depending on the number of gearboxes.

2. Method according to claim 1, wherein the submersible agitator (1) comprises a fluid accelerator taper (42), having a recessed and narrow structure, in order to prevent the material to leak inside during rotation of the fluid accelerator module (40).

3. Method according to claim 1, wherein the submersible agitator (1) comprises chambers (a, b, c, d) between the said modules, in order to prevent liquid leak into the actuator module (10).

## Patentansprüche

1. Verfahren zum Betrieb eines Tauchrührwerks, das die folgenden Schritte umfasst:
1) Bereitstellung eines Tauchrührwerks (1) zur Beschleunigung einer Suspension, das mindestens ein Aktuatormodul (10), mindestens ein Fluidbeschleunigungsmodul (40), ein Übertragungsmodul (30), das die erzeugte kinetische Energie auf das Fluidbeschleunigungsmodul (40) entlang der gleichen oder verschiedener Achsen überträgt, und Getriebemodule (20) umfasst, die eine stufenweise Einstellung der Drehgeschwindigkeit ermöglichen, wobei
- mindestens eines von dem Aktuatormodul (10), dem Übertragungsmodul (30) und dem Fluidbeschleunigungsmodul (40) unabhängig von den anderen ist,
- das Aktuatormodul (10), die Getriebemodule (20), das Übertragungsmodul (30) und das Fluidbeschleunigungsmodul (40) jeweils eine Aktuatormodul-Verbindungsfläche (15), Getriebemodul-Verbindungsflächen (22), eine Übertragungsmodul-Verbindungsfläche (32) und eine Fluidbeschleuniger-Verbindungsfläche (45) aufweisen, die mit mindestens einer der jeweiligen Verbindungsflächen übereinstimmen, um eine Verbindung zwischen mindestens zwei der Aktuatormodule (10), der Getriebemodule (20), des Übertragungsmodul (30) und des Fluidbeschleunigungsmodul (40) zu ermöglichen;
2) Auswahl eines Betriebs ohne Getriebemodul (20), mit einem Getriebemodul (20) oder mit in Reihe geschalteten Getriebemodulen (20), je nach Bedarf, um den Benutzeranforderungen für unterschiedliche Medien gerecht zu werden;
3) Betrieb des Tauchrührwerks (1) je nach Auswahl ohne Getriebemodul (20), mit einem Getriebemodul (20) oder mit in Reihe geschalteten Getriebemodulen (20), wodurch sich je nach Anzahl der Getriebe unterschiedliche Propellerdrehzahlen einstellen lassen.

2. Verfahren nach Anspruch 1, wobei das Tauchrührwerk (1) einen Fluidbeschleunigerkonus (42) mit einer vertieften und schmalen Struktur aufweist, um zu verhindern, dass das Material während der Drehung des Fluidbeschleunigungsmoduls (40) ins Innere gelangt.

3. Verfahren nach Anspruch 1, wobei das Tauchrührwerk (1) Kammern (a, b, c, d) zwischen den genannten Modulen aufweist, um das Eindringen von Flüssigkeit in das Aktuatormodul (10) zu verhindern.

## Revendications

1. Méthode de faire fonctionner d'un agitateur submersible, comprenant les étapes suivantes;
1) fournir un agitateur submersible (1) pour l'accélération d'une suspension, comprenant au moins un module actionneur (10), au moins un module accélérateur de fluide (40), un module de transmission (30) qui transmet l'énergie cinétique générée au module accélérateur de fluide (40) selon le même axe ou des axes différents et des modules de boîte de vitesses (20) qui permettent d'ajuster progressivement la vitesse de rotation, dans lequel
- au moins l'un du module d'actionnement (10), du module de transmission (30) et du module d'accélération du fluide (40) est indépendant des autres,
- le module d'actionnement (10), les modules de boîte de vitesses (20), le module de transmission (30) et le module d'accélération de fluide (40) comprennent une surface de connexion du module d'actionnement (15), des surfaces de connexion du module de boîte de vitesses (22), une surface de connexion du module de transmission (32) et une surface de connexion de l'accélérateur de fluide (45) respectivement, qui correspondent à au moins une des surfaces de connexion respectives, afin de permettre la connexion entre au moins deux du module d'actionnement (10), des modules de boîte de vitesses (20), du module de transmission (30) et du module d'accélération de fluide (40) ;
2) sélectionner un fonctionnement sans module de boîte de vitesses (20), avec un module de boîte de vitesses (20) ou des modules de boîte de vitesses (20) connectés en série, selon les besoins, afin de répondre aux exigences de l'utilisateur pour différents supports ;
3) faire fonctionner l'agitateur submersible (1) selon la sélection sans le module de boîte de vitesses (20), avec un module de boîte de vitesses (20) ou des modules de boîte de vitesses (20) connectés en série, ce qui permet d'établir différentes vitesses de rotation de l'hélice en fonction du nombre de boîtes de vitesses.

2. Méthode selon la revendication 1, dans laquelle l'agitateur submersible (1) comprend un cône d'accélération du fluide (42), ayant une structure évidée et étroite, afin d'empêcher le matériau de fuir à l'intérieur pendant la rotation du module d'accélération du fluide (40).

3. Méthode selon la revendication 1, dans laquelle l'agitateur submersible (1) comprend des chambres (a, b, c, d) entre lesdits modules, afin d'empêcher la fuite de liquide dans le module actionneur (10).
